# EUROPEAN PATENT APPLICATION

(11) **EP 4 693 874 A1**
(43) Date of publication of application: **11.02.2026**
(21) Application number: 24792541.5
(22) Date of filing: 08.04.2024
(51) Int. Cl.: H02M 7/12

(54) **CONVERTER DEVICE, AIR-CONDITIONING DEVICE PROVIDED WITH CONVERTER DEVICE, AND METHOD FOR CONTROLLING CONVERTER DEVICE**

(30) Priority: 17.04.2023 JP 2023067053
(71) Applicant: MITSUBISHI HEAVY INDUSTRIES THERMAL SYSTEMS, LTD., Tokyo 100-8332 (JP)
(72) Inventor: KUHARA, Masakazu, Tokyo 100-8332 (JP); SERIZAWA, Kazuhiko, Tokyo 100-8332 (JP); SUMITO, Kiyotaka, Tokyo 100-8332 (JP); KOMIYA, Shinichi, Tokyo 100-8332 (JP)
(74) Representative: Cabinet Beau de Loménie
(86) International application number: PCT/JP2024/014222
(87) International publication number: WO 2024/219266

(57) **Abstract**

The present invention provides a converter device that suppresses excessive heat generation in only a specific switching element. The converter device has a first arm unit (arm1) provided with a plurality of switching elements (Tr1, Tr3), and a second arm unit (arm2) provided with a plurality of switching elements (Tr2, Tr4). Said converter device comprises a bridge circuit (200) that rectifies alternating current power supplied from an alternating current source (4), and a control unit (24) that controls the switching on/off of the plurality of switching elements of the first arm unit and the plurality of switching elements of the second arm unit. At each prescribed cycle of the alternating current voltage supplied from the alternating current source, the control unit switches the switching elements within each arm unit on/off, the arm units having the same electrical characteristics.

## Description

### Technical Field

The present disclosure relates to a converter device, an air conditioning device provided with the converter device, and a method for controlling the converter device.

### Background Art

In the related art, rectification control and boosting control using a bridge circuit configured with a power transistor have been widely used.

For example, PTL 1 discloses a direct-current power supply device including a diode bridge circuit configured using power transistors having different electrical characteristics. The present direct-current power supply device is disclosed in which a reactor is provided between a diode bridge circuit including each of first to fourth switching elements connected to an alternating power supply and the alternating power supply, and power transistors having an on-resistance higher than the third and fourth switching elements are used for the first switching element and the second switching element which are switching elements on a reactor side. With such a configuration, it is possible to realize a direct-current power supply device capable of achieving both high efficiency and suppression of a harmonic current.

### Citation List

### Patent Literature

[PTL 1] Japanese Patent No. 6798802

### Summary of Invention

### Technical Problem

In the diode bridge circuit described in PTL 1, a power transformer having appropriate reverse recovery characteristics is adopted for the first switching element and the second switching element that perform switching at a high speed, and a power transistor having a low on-resistance is adopted for the third switching element and the fourth switching element that perform switching at a low speed. Meanwhile, in such a configuration, during Pulse Amplitude Modulation (PAM) control, a switching loss is concentrated on the first switching element and the second switching element, and the amount of heat generated by the first switching element and the second switching element is increased. Since the third switching element and the fourth switching element perform switching at a low speed, the amount of heat generated is not large.

In this manner, in a case where the different power transformers are adopted for the first switching element and the second switching element and for the third switching element and the fourth switching element in order to separate the functions, a difference occurs in the amount of heat generated by each switching element, and an imbalance occurs in the temperature balance of the diode bridge circuit. In a case where there is a bias in the characteristics as described above and the heat generation of a specific element is increased, the output of the element having a large amount of heat generation is limited. Therefore, it is not preferable to use the direct-current power supply device.

The present disclosure has been made in view of such circumstances, and an object of the present disclosure is to provide a converter device, an air conditioning device including the converter device, and a method for controlling the converter device, with which it is possible to suppress excessive heat generation in only a specific switching element.

### Solution to Problem

According to an aspect in some embodiments of the present disclosure, there is provided a converter device including: a bridge circuit that has a first arm portion including a plurality of switching elements and a second arm portion including a plurality of switching elements, and that rectifies alternating power supplied from an alternating power supply; and a control unit that controls on and off of the plurality of switching elements included in the first arm portion and the plurality of switching elements included in the second arm portion, in which the control unit switches on and off of the switching element in each arm portion for each predetermined cycle of an alternating voltage supplied from the alternating power supply, and each arm portion has the same electrical characteristics.

According to another aspect in some embodiments of the present disclosure, there is provided an air conditioning device including: the converter device described above.

According to still another aspect in some embodiments of the present disclosure, there is provided a method for controlling a converter device having a bridge circuit including a first arm portion including a plurality of switching elements and a second arm portion including a plurality of switching elements, the method including: a rectification step of rectifying alternating power supplied from an alternating power supply; and a control step of controlling on and off of the plurality of switching elements included in the first arm portion and the plurality of switching elements included in the second arm portion, in which in the control step, on and off of the switching element in each arm portion is switched for each predetermined cycle of an alternating voltage supplied from the alternating power supply, and each arm portion has the same electrical characteristics.

### Advantageous Effects of Invention

According to the present disclosure, an effect of suppressing excessive heat generation in only a specific switching element is achieved.

### Brief Description of Drawings

FIG. 1 is a diagram illustrating a configuration of a motor drive device according to an embodiment of the present disclosure.
FIG. 2 is a diagram illustrating a configuration of a converter control unit according to the embodiment of the present disclosure.
FIG. 3 is a diagram illustrating an example of a configuration of a control signal generation unit according to the embodiment of the present disclosure.
FIG. 4 is a comparison diagram of each waveform of a voltage of an alternating power supply and a drive pulse of each switching element during synchronous rectification control execution according to the embodiment of the present disclosure.
FIG. 5 is a diagram illustrating a current path in a case where an alternating power supply has a positive polarity in a bridge circuit according to the embodiment of the present disclosure.
FIG. 6 is a diagram illustrating a current path in a case where the alternating power supply has a negative polarity in the bridge circuit according to the embodiment of the present disclosure.
FIG. 7 is a comparison diagram of each waveform of a voltage of an alternating power supply and a drive pulse of each switching element during PAM control execution according to the embodiment of the present disclosure.
FIG. 8 is a comparison diagram of each waveform of the voltage of the alternating power supply and the drive pulse of each switching element during execution of synchronous rectification control and PAM control according to the embodiment of the present disclosure.
FIG. 9 is a comparison diagram of each waveform of the voltage of the alternating power supply and the drive pulse of each switching element during execution of synchronous rectification control and PAM control according to the embodiment of the present disclosure. Description of Embodiments

Hereinafter, a converter control device and a method for controlling the converter control device according to an embodiment of the present disclosure will be described with reference to the drawings.

Hereinafter, embodiments will be described with reference to the drawings.

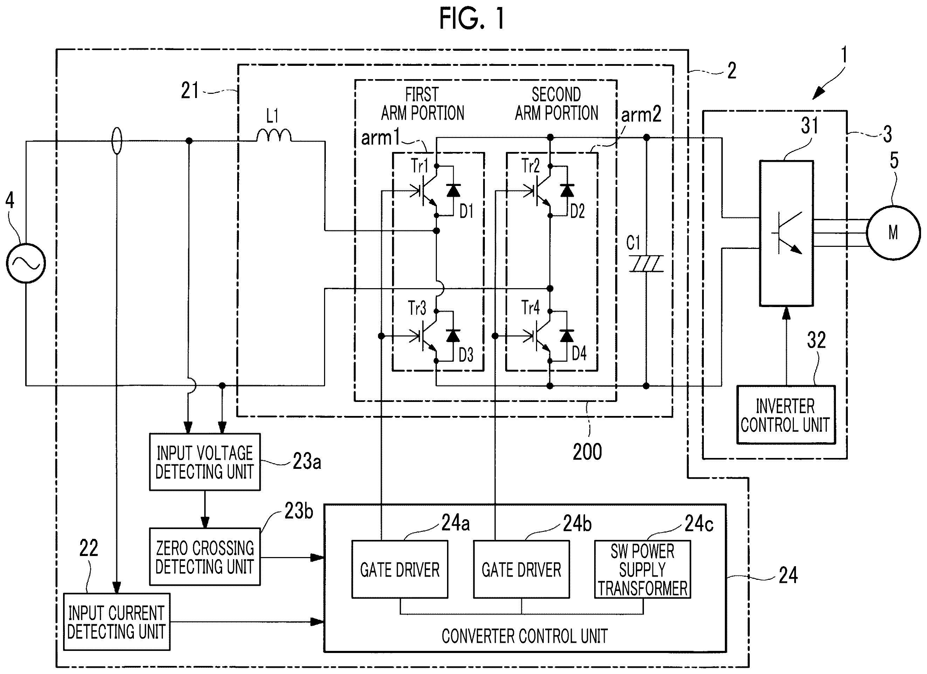

FIG. 1 is a view illustrating a configuration of a motor drive device 1 according to an embodiment of the present disclosure. As illustrated in FIG. 1, the motor drive device 1 includes a converter device 2, an inverter device 3, an alternating power supply 4, and a motor 5. The converter device 2 includes a rectification circuit 21, an input current detecting unit 22, an input voltage detecting unit 23a, a zero crossing detecting unit 23b, and a converter control unit (control unit) 24.

The motor drive device 1 is a device that converts alternating power from the alternating power supply 4 into direct-current power by the converter device 2, converts the direct-current power into three-phase alternating power by the inverter device 3, and outputs the three-phase alternating power to the motor 5.

The alternating power supply 4 supplies, for example, single-phase alternating power to the converter device 2. The alternating power supply 4 supplies, for example, a power supply voltage and an input current to the converter device 2.

The motor 5 is driven according to the three-phase alternating power supplied from the inverter device 3. The motor 5 is, for example, a compressor motor used in an air conditioner.

As illustrated in FIG. 1, the converter device 2 includes the rectification circuit 21, the input current detecting unit 22, the input voltage detecting unit 23a, the zero crossing detecting unit 23b, and the converter control unit 24. As illustrated in FIG. 1, the rectification circuit 21 includes a bridge circuit 200, a reactor L1, and a smoothing capacitor C1. The bridge circuit 200 includes switching elements Tr1 to Tr4 and parasitic diodes D1 to D4. Each of the parasitic diodes D1 to D4 is connected in parallel to each of the switching elements Tr1 to Tr4.

The converter device 2 is a device that performs synchronous rectification control and PAM control, and further adjusts a phase difference between a power supply voltage and a voltage command (that is, a control signal of a switching element). By adjusting the phase difference between the power supply voltage and the voltage command, the converter device 2 can reduce a change in a phase of the power supply voltage caused by a change in the input current in a case of performing the PAM control, and as a result, characteristics of conversion efficiency from the alternating power to the direct-current power or a distortion rate of the input current can be improved.

The converter device 2 converts the alternating power into direct-current power, and outputs the direct-current power to the inverter device 3.

The bridge circuit 200 included in the rectification circuit 21 has a first arm portion arm1 including a plurality of switching elements and a second arm portion arm2 including a plurality of switching elements, and rectifies the alternating power supplied from the alternating power supply 4.

In the bridge circuit 200, the switching elements Tr1 to Tr4 and the parasitic diodes D1 to D4 are connected in a bridge manner. A source of the switching element Tr1 is connected to a drain of the switching element Tr3 and is connected to one end of the alternating power supply 4 via the reactor L1. The first arm portion arm1 is configured such that the switching element Tr1 and the switching element Tr3 are connected in series.

In the same manner, a source of the switching element Tr2 is connected to a drain of the switching element Tr4. The source of the switching element Tr2 is connected to one end of the alternating power supply 4. The second arm portion arm2 is configured such that the switching element Tr2 and the switching element Tr4 are connected in series.

The definition of the arm portion configured by connecting the plurality of switching elements is not limited to the example of the present embodiment, and parallel connection between the switching element Tr1 and the switching element Tr2 may be defined as the first arm portion arm1 and parallel connection between the switching element Tr3 and the switching element Tr4 may be defined as the second arm portion arm2.

A first terminal of the rectification circuit 21 is connected to each of a first terminal of the input current detecting unit 22 and a first terminal of the input voltage detecting unit 23a. A second terminal of the rectification circuit 21 is connected to a second terminal of the input voltage detecting unit 23a. A fifth terminal of the rectification circuit 21 is connected to a first terminal of the converter control unit 24. More specifically, the fifth terminal of the rectification circuit 21 is connected to a gate driver 24a included in the converter control unit 24. A sixth terminal of the rectification circuit 21 is connected to a second terminal of the converter control unit 24. More specifically, the sixth terminal of the rectification circuit 21 is connected to a gate driver 24b included in the converter control unit 24. A second terminal of the input current detecting unit 22 is connected to a third terminal of the converter control unit 24. A third terminal of the input voltage detecting unit 23a is connected to a first terminal of the zero crossing detecting unit 23b. A second terminal of the zero crossing detecting unit 23b is connected to a fourth terminal of the converter control unit 24.

The reactor L1 is provided between the alternating power supply 4 and the rectification circuit 21. The reactor L1 stores power supplied from the alternating power supply 4 as energy, and further releases the energy to perform boosting. The smoothing capacitor C1 smooths the rectified voltage through the switching element Tr1 or the switching element Tr2 to generate a direct-current voltage.

The smoothing capacitor C1 is connected to an output side of the bridge circuit 200, a positive electrode side is connected to drains of the switching element Tr1 and the switching element Tr2, and a negative electrode side is connected to sources of the switching element Tr3 and the switching element Tr4. The smoothing capacitor C1 is a capacitor that smooths direct-current power output by the bridge circuit 200. The smoothing capacitor C1 supplies the direct-current voltage with little fluctuation in voltage value from the converter device 2 to the inverter device 3. The smoothing capacitor C1 is, for example, an electrolytic capacitor.

ON and OFF of the switching elements Tr1 to Tr4 are controlled by a command from the converter control unit 24 as will be described below. The switching elements Tr1 to Tr4 are, for example, MOSFETs, and electrical characteristics of each switching element are the same. By using the switching elements Tr1 to Tr4, switching of the converter device 2 can be performed at a high speed, and by allowing a current to flow through the MOSFET having a small voltage drop, it is possible to perform synchronous rectification control and reduce a conduction loss of the circuit.

Here, the electrical characteristics are not limited to the meanings of insulation, dielectric properties, and charging properties, and refer to characteristics related to specifications of electronic components, such as heat resistance, an applicable voltage range, and an applicable current range of electronic components during use.

In the present embodiment, the switching elements Tr1 to Tr4 included in the bridge circuit 200 are, for example, MOSFETs. As the MOSFET, for example, a MOSFET (hereinafter, referred to as an SJ-MOSFET) adopting a Super Junction (SJ) structure having a small on-resistance (operating resistance when the MOSFET is operating) can be adopted. A high-speed type SJ-MOSFET may be used as the SJ-MOSFET. Next-generation semiconductors such as SiC-MOSFETs, GaN-MOSFETs, and Ga₂O₃-MOSFETs having appropriate reverse recovery characteristics may be used.

The input current detecting unit 22 detects a current value of the input current supplied from the alternating power supply 4 to the converter device 2 for each cycle that is sufficiently shorter than a cycle of the alternating voltage output by the alternating power supply 4. For example, the input current detecting unit 22 includes a current sensor provided between the alternating power supply 4 and the converter device 2, and detects a current value of the input current read by the current sensor (an example of a physical quantity related to the input current). For example, the input current detecting unit 22 may include a shunt resistor provided between the alternating power supply 4 and the converter device 2, and may detect a current value by dividing an electric potential difference (an example of the physical quantity related to the input current) between both ends of the shunt resistor by a resistance value.

The input current detecting unit 22 outputs the detected current value of the input current to the converter control unit 24.

The input voltage detecting unit 23a detects a voltage value of the input voltage supplied from the alternating power supply 4 to the converter device 2 for each cycle that is sufficiently shorter than the cycle of the alternating voltage output by the alternating power supply 4. For example, the input voltage detecting unit 23a includes a voltage sensor provided between the alternating power supply 4 and the converter device 2, and detects a voltage value (an example of a physical quantity related to the input voltage) of the input voltage read by the voltage sensor.

The input voltage detecting unit 23a outputs the detected voltage value of the input voltage to the zero crossing detecting unit 23b.

The zero crossing detecting unit 23b has a function of determining whether or not a polarity of the voltage value of the alternating power supply 4 detected by the input voltage detecting unit 23a is switched (whether or not a zero crossing point is reached). The zero crossing detecting unit 23b is a polarity detecting unit that detects the polarity of the voltage of the alternating power supply 4, and outputs a zero crossing signal to the converter control unit 24. For example, the zero crossing detecting unit 23b outputs a signal of "1" to the converter control unit 24 during a period of a positive voltage of the alternating power supply 4, and outputs a signal of "0" to the converter control unit 24 during a period of a negative voltage of the alternating power supply 4.

For example, the converter control unit 24 is configured to include a central processing unit (CPU), a random-access memory (RAM), a read-only memory (ROM), and a computer-readable storage medium. A series of processing for realizing various functions is stored in a storage medium or the like in the form of a program, as an example, and the CPU reads out the program to the RAM or the like, and executes processing for information and calculation processing, whereby various functions are realized. The program may be applied in the form of being, for example, pre-installed in the ROM or another storage medium, provided in a state of being stored in the computer-readable storage medium, or distributed via wired or wireless communication means. The computer-readable storage medium is a magnetic disk, a magnetooptical disk, a CD-ROM, a DVD-ROM, a semiconductor memory, or the like.

The converter control unit 24 includes the gate driver 24a, the gate driver 24b, and an SW power supply transformer 24c.

The gate driver 24a is connected to a gate of the switching element Tr1 and to each gate of the switching element Tr3, and outputs a control signal for switching between ON and OFF of each of the switching element Tr1 and the switching element Tr3, based on each output of the input current detecting unit 22 and the zero crossing detecting unit 23b.

The gate driver 24b is connected to a gate of the switching element Tr2 and to each gate of the switching element Tr4, and outputs a control signal for switching between ON and OFF of the switching element Tr2 and the switching element Tr4 based on each output of the input current detecting unit 22 and the zero crossing detecting unit 23b.

The SW power supply transformer 24c reduces the alternating voltage supplied to the converter device 2 to a voltage that can be signal-processed by the converter control unit 24, and generates a power supply signal for driving the converter control unit 24.

The converter control unit 24 receives the current value of the input current from the input current detecting unit 22. The converter control unit 24 receives the zero crossing signal from the zero crossing detecting unit 23b. Then, the converter control unit 24 controls ON and OFF of each of the switching elements Tr1 to Tr4 based on the signals received from the input current detecting unit 22 and the zero crossing detecting unit 23b, and executes the synchronous rectification control and the PAM control by the converter device 2.

In a case where the switching elements Tr1 to Tr4 constituting each arm portion are identical, the converter control unit 24 may control each arm portion by using common software, more specifically, by using a single control algorithm.

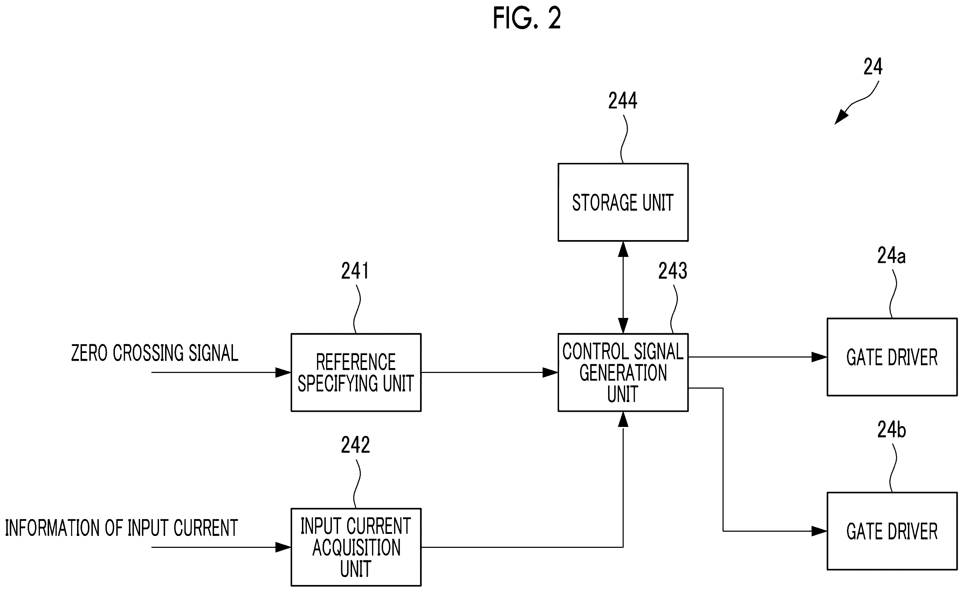

Further, as illustrated in FIG. 2, the converter control unit 24 includes a reference specifying unit 241, an input current acquisition unit 242, a control signal generation unit 243, and a storage unit 244.

The storage unit 244 stores information necessary for various processes performed by the converter control unit 24. For example, the storage unit 244 stores a conversion table for converting a voltage value between terminals of an electrolytic capacitor into a root-mean-square value of the input current in advance. For example, the storage unit 244 stores a data table (not illustrated). The data table is, for example, a data table illustrating a correspondence relationship between the root-mean-square value of the input current and the adjustment amount of a phase of a voltage command (that is, the control signal of the switching element) with a phase of a power supply voltage corresponding to the root-mean-square value as a reference. For example, the data table may be obtained by storing a correspondence relationship between a root-mean-square value of the input current in a case where the distortion rate of the input current and the conversion efficiency from the alternating power to the direct-current power in the past are appropriate and the adjustment amount of the phase of the voltage command with respect to the phase of the power supply voltage in a case of the root-mean-square value, in the storage unit 244 in advance. For example, the data table may be obtained by storing a correspondence relationship between a root-mean-square value of the input current in a case where a prioritized characteristic is appropriate by prioritizing one of the distortion rate of the input current and the conversion efficiency from the alternating power to the direct-current power in the past and the adjustment amount of the phase of the voltage command with respect to the phase of the power supply voltage in a case of the root-mean-square value, in the storage unit 244 in advance.

The reference specifying unit 241 specifies a reference time. For example, the reference specifying unit 241 acquires a zero crossing signal from the zero crossing detecting unit 23b. The reference specifying unit 241 specifies a reference time indicated by the acquired zero crossing signal. The reference specifying unit 241 outputs the specified reference time to the control signal generation unit 243.

The input current acquisition unit 242 acquires a current value of the input current (that is, a current value of the input current input from the alternating power supply 4 to the converter device 2) from the input current detecting unit 22 at each detection time of the input current of the input current detecting unit 22. The input current acquisition unit 242 outputs the acquired current value to the control signal generation unit 243.

The control signal generation unit 243 acquires the reference time from the reference specifying unit 241. The control signal generation unit 243 acquires the current value of the input current from the input current acquisition unit 242. The control signal generation unit 243 sets a phase at the reference time acquired from the reference specifying unit 241 as a reference 0 degree of a phase θ. Then, the control signal generation unit 243 calculates a root-mean-square value of the input current based on the reference of the phase θ.

For example, the control signal generation unit 243 takes a root mean square of an integrated value of the current values of the input current acquired from the input current acquisition unit 242 according to a phase from the reference phase θ to calculate a root-mean-square value of the input current.

**In** a case where the input current detecting unit 22 includes a current sensor (for example, a current transformer), the input current is full-wave rectified by the bridge circuit 200 via the current transformer, and charges the smoothing capacitor C1. The control signal generation unit 243 reads a voltage level in a state smoothed by the smoothing capacitor C1. Then, the control signal generation unit 243 may calculate the root-mean-square value of the input current by converting the read voltage value into a current value associated with the voltage value on a one-to-one basis. In a case of converting the voltage value into the current value, a conversion table indicating a correspondence relationship between the voltage value and the current value may be created in advance and stored in the storage unit 244, and the control signal generation unit 243 may convert the read voltage value into the root-mean-square value of the current by using the conversion table.

The control signal generation unit 243 compares the calculated root-mean-square value of the input current with the root-mean-square value of the input current in the data table. The control signal generation unit 243 specifies, in the data table, a root-mean-square value of the input current closest to the calculated root-mean-square value of the input current, based on the comparison result. The control signal generation unit 243 specifies the phase adjustment amount associated with the specified input current in the data table.

The control signal generation unit 243 adjusts a phase by the adjustment amount of the phase specified with reference to the phase of the power supply voltage (that is, with reference to a zero crossing point).

Then, the control signal generation unit 243 outputs the control signal of which the phase is adjusted to each of the switching elements Tr1 to Tr4.

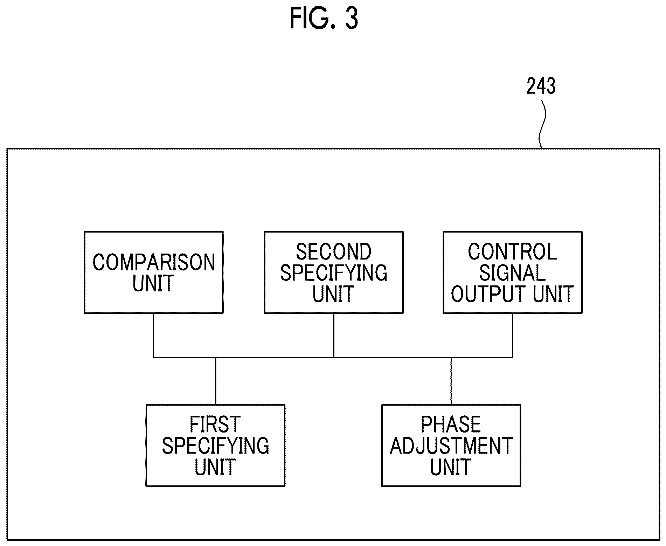

As illustrated in FIG. 3, the control signal generation unit 243 includes a comparison unit, a first specifying unit, a second specifying unit, a phase adjustment unit, and a control signal output unit.

The comparison unit compares the current value of the input current acquired by the input current acquisition unit 242 with the current value in the data table.

The first specifying unit specifies, in the data table, a current value of a value closest to the current value acquired by the input current acquisition unit 242, based on the comparison result by the comparison unit.

The second specifying unit specifies the adjustment amount of a phase associated with the current value specified by the first specifying unit in the data table.

The phase adjustment unit adjusts a phase of a control signal by the adjustment amount specified by the second specifying unit with a phase of the alternating voltage as a reference.

The control signal output unit outputs a control signal, in which the phase is adjusted by the adjustment amount by the phase adjustment unit, to each of the switching elements Tr1 to Tr4.

The control signal output unit may output a control signal for performing synchronous rectification control to one of the two switching elements (for example, the switching element Tr1) and may output a control signal for performing PAM control to the other of the two switching elements (for example, the switching element Tr3).

The control signal output unit may switch between the two switching elements, which are output destinations of the control signal for performing synchronous rectification control and the control signal for performing PAM control, for each half cycle (for example, switching from the switching element Tr1 to the switching element Tr2 and switching from the switching element Tr3 to the switching element Tr4).

The description will be continued with reference to FIG. 1. The inverter device 3 includes an intelligent power module (IPM) 31 and an inverter control unit 32.

The IPM 31 generates three-phase alternating power from the direct-current power based on control by the inverter control unit 32. The IPM 31 supplies the generated three-phase alternating power to the motor. The IPM 31 is, for example, a bridge circuit including six switching elements.

The inverter control unit 32 controls the IPM 31. Specifically, the inverter control unit 32 causes the IPM 31 to generate three-phase alternating power from the direct-current power. For example, in a case where the IPM 31 is a bridge circuit including six switching elements, the inverter control unit 32 controls a current flowing through each of the six switching elements by switching an ON-period and an OFF-period of each of the six switching elements, thereby causing the IPM 31 to generate three-phase alternating power from the direct-current power.

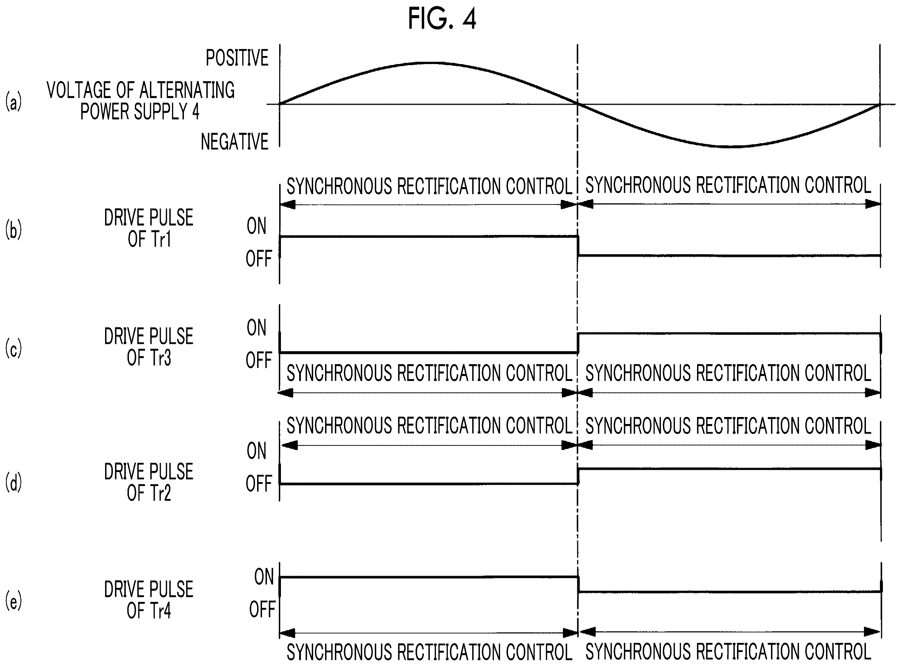

As illustrated in each of FIGS. 4, 7, and 8, the converter control unit 24 switches between a case where PAM control is performed in the switching elements Tr1 and Tr3 and synchronous rectification control is performed in the switching elements Tr2 and Tr4 and a case where synchronous rectification is performed in the switching elements Tr1 and Tr3 and PAM control is performed in the switching elements Tr2 and Tr4, for each half cycle of the power supply voltage supplied from the alternating power supply 4. The PAM control performed by the converter control unit 24 may use a pulse width modulation (PWM) generation technique that generates a PAM control signal according to the input current.

### (Example of Execution of Synchronous Rectification Control)

FIG. 4 is a comparison diagram of each waveform of a voltage of the alternating power supply 4 and a drive pulse of the switching elements Tr1 to Tr4 during synchronous rectification control execution. (a) in FIG. 4 illustrates a waveform of an instantaneous value of the voltage of the alternating power supply 4, (b) in FIG. 4 illustrates a waveform of a drive pulse of the switching element Tr1, and (c) in FIG. 4 illustrates a waveform of a drive pulse of the switching element Tr3. (d) in FIG. 4 illustrates a waveform of a drive pulse of the switching element Tr2, and (e) in FIG. 4 illustrates a waveform of a drive pulse of the switching element Tr4.

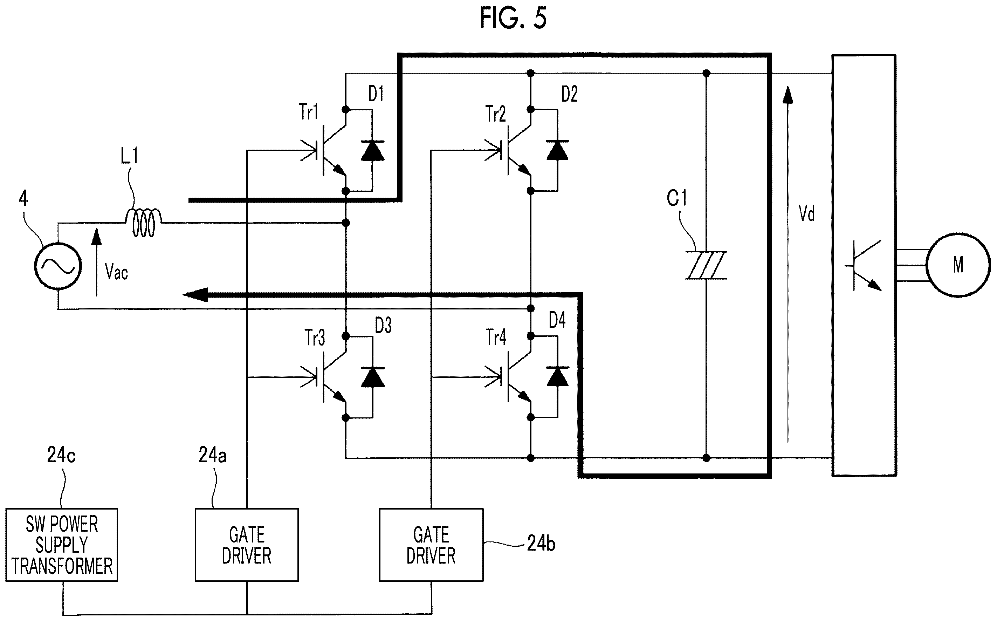

In a section in which the voltage output from the alternating power supply 4 has a positive polarity, a state of each switching element is that the switching elements Tr1 and Tr4 are ON and the switching elements Tr2 and Tr3 are OFF. In this case, as illustrated by a thick line in FIG. 5, a current flows from a first terminal of the alternating power supply 4 to the reactor L1, the switching element Tr1, the smoothing capacitor C1, the switching element Tr4, and a second terminal of the alternating power supply 4. At this time, the smoothing capacitor C1 is charged.

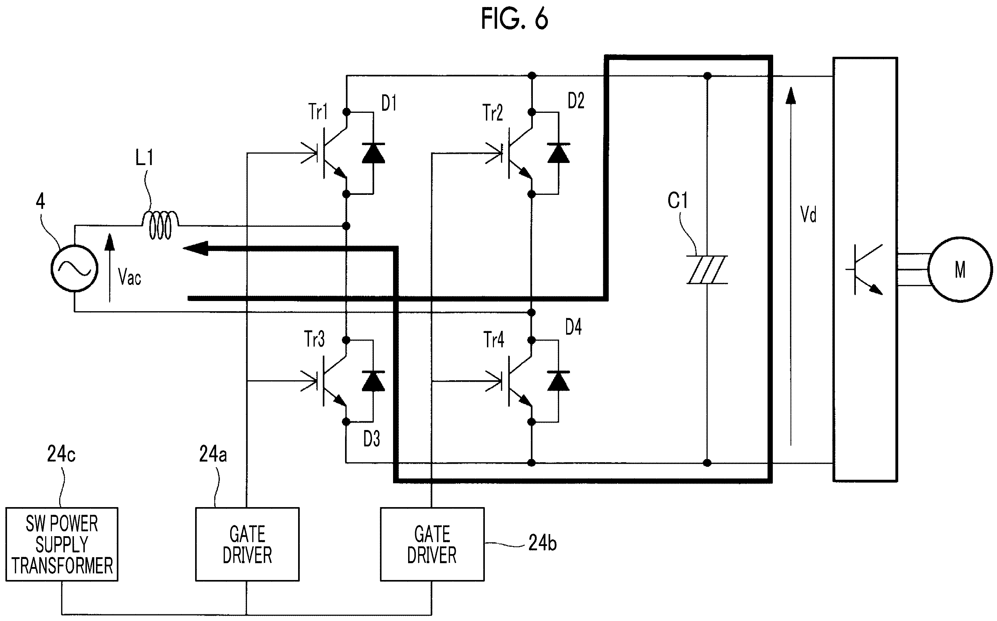

In a section in which the voltage output from the alternating power supply 4 has a negative polarity, the state of each switching element is that the switching elements Tr2 and Tr3 are ON and the switching elements Tr1 and Tr4 are OFF. In this case, as illustrated by a thick line in FIG. 6, the current flows from the second terminal of the alternating power supply 4 to the switching element Tr2, the smoothing capacitor C1, the switching element Tr3, the reactor L1, and the first terminal of the alternating power supply 4. At this time, the smoothing capacitor C1 is charged. In this manner, the synchronous rectification control is performed by switching the drive state of each of the switching elements Tr1 to Tr4.

In this manner, for example, in a case where the voltage of the alternating power supply 4 has a positive polarity, in a case where the switching elements Tr1 and Tr4 are not ON, the current flows through the parasitic diodes D1 and D4 of the switching elements Tr1 and Tr4. Meanwhile, normally, since a forward voltage drop of the parasitic diode of the MOSFET is large, a large conduction loss occurs. Therefore, it is possible to reduce the conduction loss by turning ON the switching elements Tr1 and Tr4 in synchronization with the voltage of the alternating power supply 4 and allowing the current to flow through on-resistances of the switching elements Tr1 and Tr4. The above is the principle of the synchronous rectification control.

### (Diode Rectification Operation)

As described above, the bridge circuit 200 of the present embodiment can perform synchronous rectification control by switching between ON and OFF of each of the switching elements Tr1 to Tr4.

In a case where each of the switching elements Tr1 to Tr4 is OFF, a current output from the alternating power supply 4 does not flow through the switching elements Tr1 to Tr4, but flows through the parasitic diodes D1 to D4 connected in parallel to the switching elements Tr1 to Tr4. More specifically, in a case where a voltage of the alternating power supply 4 has a positive polarity, the current output from the alternating power supply 4 flows through the parasitic diodes D1 and D4 instead of the switching elements Tr1 and Tr4 through the path illustrated in FIG. 5. In a case where the voltage of the alternating power supply 4 has a negative polarity, the current output from the alternating power supply 4 flows through the parasitic diodes D2 and D3 instead of the switching elements Tr2 and Tr3 in the path illustrated in FIG. 6.

In this manner, even in a case where each of the switching elements Tr1 to Tr4 is OFF, the current output from the alternating power supply 4 flows to the parasitic diodes D1 to D4 regardless of the polarity of the voltage of the alternating power supply 4, and thus, the rectification operation is performed.

### (Example of Execution of PAM Control)

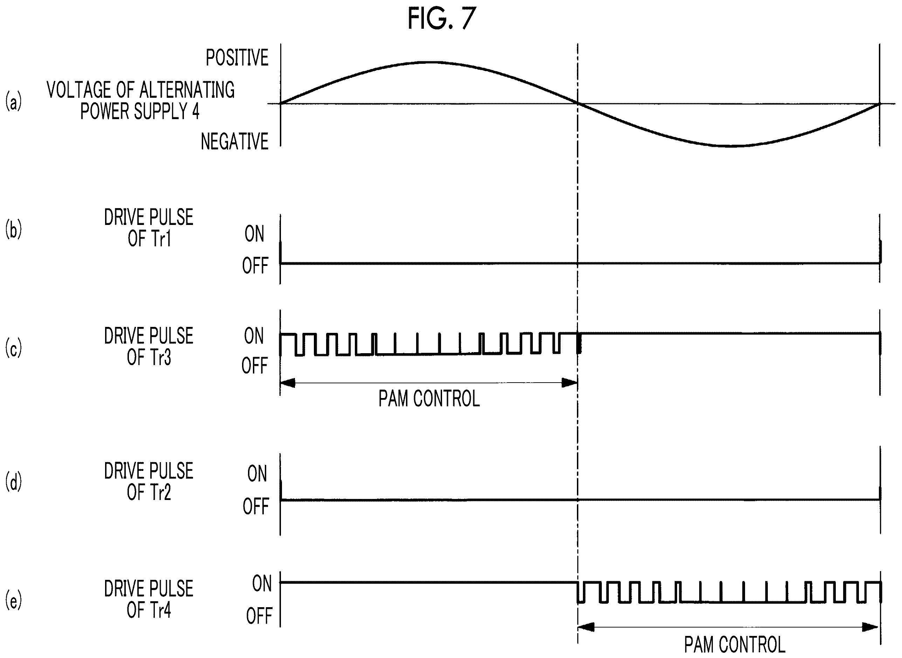

FIG. 7 is a comparison diagram of each waveform of a voltage of the alternating power supply 4 and a drive pulse of the switching elements Tr1 to Tr4 during PAM control execution. Each waveform of (a) to (e) in FIG. 7 corresponds to each of (a) to (e) in FIG. 4.

The converter control unit 24 can perform PAM control by using the switching elements Tr1 to Tr4. Specifically, the PAM control is performed such that an input current output from the alternating power supply 4 approaches a cycle of an alternating voltage output from the alternating power supply 4 and a harmonic distortion is equal to or less than a desired distortion rate.

In a section in which the voltage output from the alternating power supply 4 has a positive polarity, a state of each switching element is that the switching element Tr4 is ON, and ON and OFF for the switching element Tr3 is switched a plurality of times. In a case where the switching element Tr3 is ON, a power factor correction current flows in an order of the alternating power supply 4 → the reactor L1 → the switching element Tr3 → the switching element Tr4 → the alternating power supply 4. At this time, energy is stored in the reactor L1. Then, the energy stored in the reactor L1 is released to the smoothing capacitor C1, so that a direct-current voltage Vd is boosted and a power factor is improved.

In a section in which the voltage output from the alternating power supply 4 has a negative polarity, the state of each switching element is that the switching element Tr3 is ON, ON and OFF of the switching element Tr4 is switched a plurality of times. In this case, the power factor correction current flows in the order of the alternating power supply 4 → the switching element Tr4 → the switching element Tr3 → the reactor L1 → the alternating power supply 4. At this time, energy is stored in the reactor L1. Then, the energy stored in the reactor L1 is released to the smoothing capacitor C1, so that the direct-current voltage Vd is boosted and the power factor is improved.

In this manner, the PAM control is performed by switching the drive states of the switching elements Tr3 and Tr4 in accordance with the polarity of the voltage output from the alternating power supply 4.

In the PAM control, the switching elements Tr1 and Tr2 are OFF, and the current flowing through the circuit flows through the parasitic diodes D1 and D2.

### (Example of Executing Synchronous Rectification Control and PAM Control)

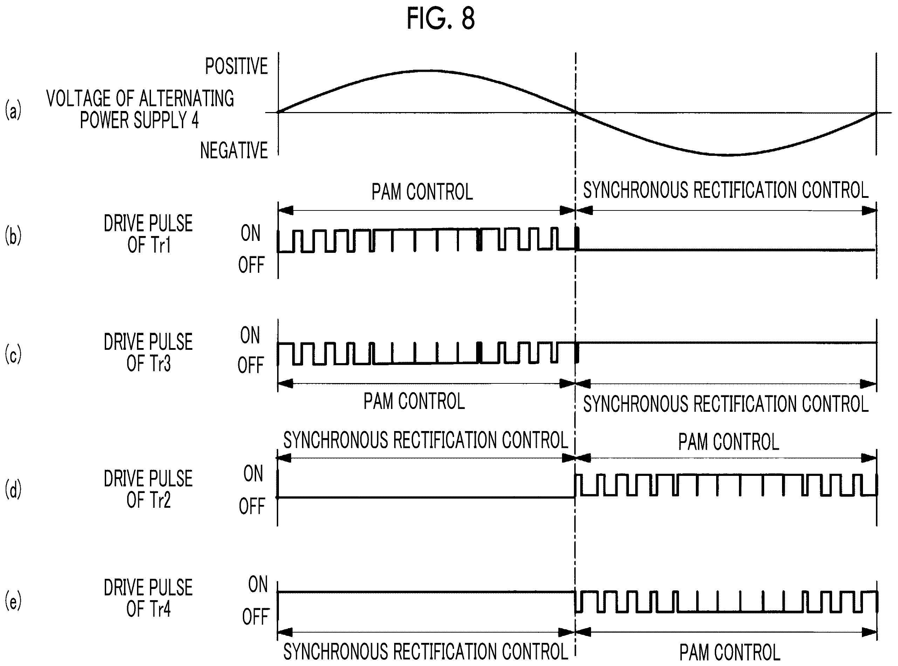

FIG. 8 is a comparison diagram of each waveform of a voltage of the alternating power supply 4 and a drive pulse of the switching elements Tr1 to Tr4 during execution of synchronous rectification control and PAM control. Each waveform of (a) to (e) in FIG. 8 corresponds to (a) to (e) in FIG. 4. In the present embodiment, as illustrated in FIG. 8, an arm portion that performs the synchronous rectification control and the PAM control is switched for each half cycle of the alternating voltage supplied from the alternating power supply 4.

For example, in a section in which the voltage of the alternating power supply 4 has a positive polarity, each drive pulse of the switching elements Tr1 and Tr3 illustrated in (b) of FIG. 8 and (c) of FIG. 8 is a drive pulse that is switched to be ON and OFF a plurality of times to have polarities opposite to each other. As illustrated in (d) of FIG. 8, the drive pulse of the switching element Tr2 is OFF, and as illustrated in (e) of FIG. 8, the drive pulse of the switching element Tr4 is ON.

The converter control unit 24 switches between ON and OFF of the switching elements Tr1 and Tr3 on the first arm portion arm1 side in a case where the voltage of the alternating power supply 4 has a positive polarity. In this manner, a power factor correction current flows through the rectification circuit 21, and the PAM control is performed. The converter control unit 24 outputs the drive pulse to the switching elements Tr2 and Tr4 on the second arm portion arm2 side via the gate drivers 24a and 24b. In this manner, the synchronous rectification control is performed by the switching elements Tr2 and Tr4 on the second arm portion arm2 side.

In a section in which the voltage of the alternating power supply 4 has a negative polarity, ON and OFF of each drive pulse of the switching elements Tr2 and Tr4 illustrated in (d) of FIG. 8 and (e) of FIG. 8 is switched a plurality of times such that the polarities are opposite to each other. As illustrated in (b) of FIG. 8, the drive pulse of the switching element Tr1 is OFF, and as illustrated in (c) of FIG. 8, the drive pulse of the switching element Tr3 is ON.

The converter control unit 24 switches between ON and OFF of the switching elements Tr2 and Tr4 on the second arm portion arm2 side in a case where the voltage of the alternating power supply 4 has a negative polarity. In this manner, the power factor correction current flows through the rectification circuit 21, and the PAM control is performed. The converter control unit 24 outputs the drive pulse to the switching elements Tr1 and Tr3 on the first arm portion arm1 side via the gate drivers 24a and 24b. In this manner, the synchronous rectification control is performed by the switching elements Tr1 and Tr3 on the first arm portion arm1 side.

In this manner, the converter control unit 24 controls the drive state of each of the switching elements Tr1 to Tr4 such that the arm portion performing the synchronous rectification control and the arm portion performing the PAM control are alternately switched in accordance with the polarity of the voltage of the alternating power supply 4.

For example, in a case where the voltage of the alternating power supply 4 has a positive polarity, in order to boost the direct-current voltage and improve the power factor, the switching element Tr3 is ON and the switching element Tr1 is OFF to allow the power factor correction current to flow. Further, the switching element Tr2 is OFF and the switching element Tr4 is ON in synchronization with a voltage Vac of the alternating power supply 4. Then, after the switching element Tr1 is OFF from ON, the switching element Tr3 is ON. That is, the switching element Tr4 is ON in synchronization with the voltage Vac of the alternating power supply 4, and the switching elements Tr1 and Tr3 are alternately switched.

With such control, it is possible to reduce a conduction loss, and to boost a direct-current voltage and improve a power factor.

In the same manner, in a case where the voltage of the alternating power supply 4 has a negative polarity, the switching element Tr3 is ON in synchronization with the voltage Vac of the alternating power supply 4, and the switching element Tr2 and the switching element Tr4 are alternately switched.

Here, a case where ON and OFF of a switching element is not switched for each half cycle of an alternating voltage supplied from the alternating power supply 4, that is, a case where synchronous rectification control and PAM control are performed only by any one of the first arm portion arm1 (switching element Tr1 and switching element Tr3) or the second arm portion arm2 (switching element Tr2 and switching element Tr4) will be compared.

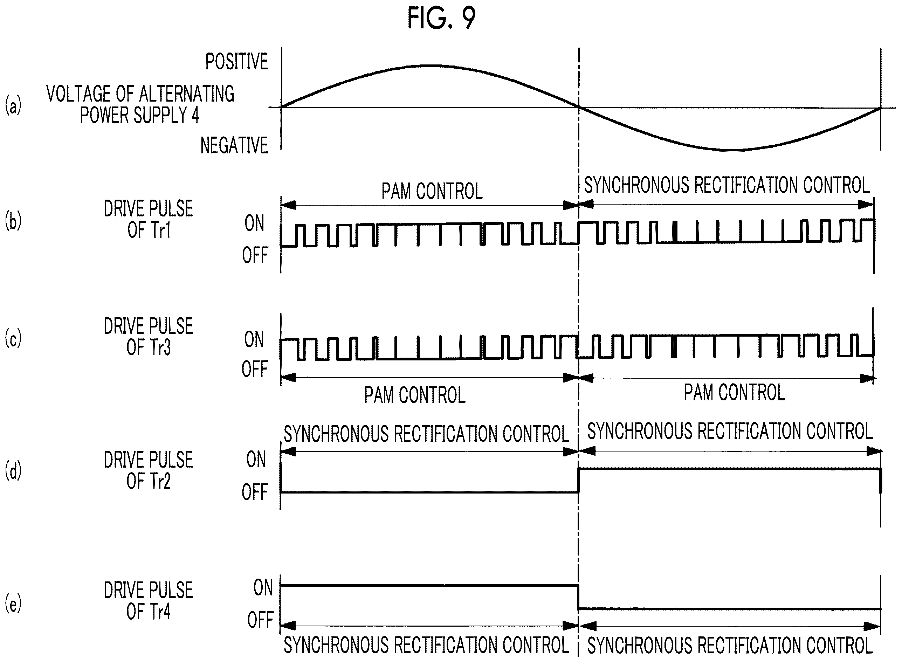

FIG. 9 is a comparison diagram of each waveform of a voltage of the alternating power supply 4 and a drive pulse of the switching elements Tr1 to Tr4 during execution of synchronous rectification control and PAM control. Each waveform of (a) to (e) in FIG. 9 corresponds to (a) to (e) in FIG. 4. As illustrated in FIG. 9, there is one arm portion that performs synchronous rectification control and PAM control, regardless of a phase of the voltage of the alternating power supply 4.

In a configuration of a rectification circuit, for example, the first arm portion arm1 that performs a high-speed operation may be configured with a switching element having appropriate reverse recovery characteristics, and the second arm portion arm2 that performs a low-speed operation may be configured with a switching element having a low on-resistance. That is, there is a case where electrical characteristics of the switching element constituting the first arm portion arm1 and electrical characteristics of the switching element constituting the second arm portion arm2 are different from each other. In such a case, in order to perform the synchronous rectification control and the PAM control, the first arm portion arm1 capable of performing the high-speed switching is continuously driven.

When the electrical characteristics of the first arm portion arm1 and the second arm portion arm2 are different, the synchronous rectification control and the PAM control are performed. In this case, as illustrated in FIG. 9, regardless of the phase of the voltage of the alternating power supply 4, ON and OFF of the switching elements Tr1 and Tr3, which are the switching elements of the first arm portion arm1, is always controlled to be switched. In this manner, while heat generation is concentrated on the switching element Tr1 and the switching element Tr3, heat generation of the switching element Tr2 and the switching element Tr4 is suppressed. Therefore, in the bridge circuit 200, a loss balance deteriorates due to this switching, and the heat generation is concentrated on the switching element constituting the first arm portion arm1, so that the output is limited.

According to the control illustrated in FIG. 9, the electrical characteristics of the first arm portion arm1 and the second arm portion arm2 are made the same, so that the arm portion in which the synchronous rectification control and the PAM control are performed for each half cycle of the alternating voltage supplied from the alternating power supply 4 can be switched. Therefore, it is possible to distribute the loss due to the heat generation of each switching element during the synchronous rectification control and the PAM control. In this manner, it is possible to improve the loss balance of the bridge circuit 200.

In the present embodiment, the first arm portion arm1 and the second arm portion arm2 are configured with the four switching elements, and the arm portion to be driven is switched for each half cycle of the alternating voltage supplied from the alternating power supply 4. Meanwhile, the number of switching elements, the number of arm portions, the cycle of the switching time of the arm portion to be driven, and the like may be appropriately changed according to a control content to be achieved.

According to the present embodiment, the following effects are achieved.

In the bridge circuit 200 of the present embodiment, the first arm portion arm1 and the second arm portion arm2 have the same electrical characteristics. That is, each of the arm portions has the ability to perform the synchronous rectification control and the PAM control.

In a case where the electrical characteristics of the first arm portion arm1 and the second arm portion arm2 are different from each other and there is a need to perform switching at a high speed, only one of the arm portions appropriate for a high-speed operation performs switching. In this manner, only one arm portion is driven, so that heat generation is concentrated on the switching element provided in the arm portion capable of the high-speed operation, and the switching element is driven under more disadvantageous conditions (specifically, during high-temperature operation). As a result, the heat loss of the specific arm portion is increased, and the amount of heat generated by the switching element further is increased.

According to the present embodiment, the converter control unit 24 can switch between ON and OFF of each of the switching elements Tr1 to Tr4 via each of the gate drivers 24a and 24b such that arm portions to be driven are alternately switched in accordance with a predetermined cycle of the alternating voltage supplied from the alternating power supply 4. In this manner, the drive of the specific arm portion can be continued, and the heat generation can be concentrated on the specific switching element.

Since the heat generation by the switching elements Tr1 to Tr4 included in each arm portion can be suppressed, the loss caused by the heat generated by the switching elements Tr1 to Tr4 can be suppressed, and efficiency of the switching elements Tr1 to Tr4 can be improved.

Further, since the heat generation by the switching elements Tr1 to Tr4 can be suppressed, a heat radiating member such as a heat radiating fin can be reduced in size in a device including the converter device 2.

**In** the bridge circuit 200 of the present embodiment, in a case where the first arm portion arm1 and the second arm portion arm2 are configured with the switching elements having the same electrical characteristics, more specifically, switching elements having the same electrical characteristics, the converter control unit 24 can control each arm portion by using common software. **In** this manner, the software for driving the converter device 2 can be simplified, and computation costs such as memory consumption can be reduced.

The present disclosure has been described above with reference to the embodiments, but the technical scope of the present disclosure is not limited to the embodiments described above. Various modifications or improvements can be added to the embodiments described above within the scope not departing from the concept of the present disclosure, and forms to which the modifications or the improvements are added are also included in the technical scope of the present disclosure. The above embodiments may be combined as appropriate.

In the present embodiment, a case of a single-phase (two-phase) is described as an example, but the embodiment invention is not limited to this example. For example, the present embodiment is also applicable to a case where three-phase alternating power is supplied from a three-phase alternating power supply. In this case, in the bridge circuit 200 described above, a third arm portion having the same electrical characteristics as the first arm portion arm1 and the second arm portion arm2 is connected in parallel with the first arm portion arm1 and the second arm portion arm2. Then, the converter control unit 24 may switch ON and OFF of each switching element provided in each arm portion every 1/3 cycle of the alternating voltage supplied from the alternating power supply 4, and may appropriately execute synchronous rectification control and/or PAM control. The number of the arm portions may be appropriately changed without departing from the scope of the present disclosure.

### (Additional Notes)

A converter device, an air conditioning device provided with the converter device, and a method for controlling the converter device described in the embodiments described above are understood as follows, for example.

According to a first aspect of the present disclosure, a converter device including: a bridge circuit (200) that has a first arm portion (arm1) including a plurality of switching elements (Tr1, Tr3) and a second arm portion (arm2) including a plurality of switching elements (Tr2, Tr4), and that rectifies alternating power supplied from an alternating power supply (4); and a control unit (24) that controls on and off of the plurality of switching elements included in the first arm portion and the plurality of switching elements included in the second arm portion, in which the control unit switches on and off of the switching element in each arm portion for each predetermined cycle of an alternating voltage supplied from the alternating power supply, and each arm portion has the same electrical characteristics.

With the converter device of the present disclosure, the control unit switches ON and OFF of each of the switching elements in each arm portion, for each predetermined cycle of the voltage supplied from the alternating power supply, in the bridge circuit including the first arm portion and the second arm portion each including the plurality of switching elements and having the same electrical characteristics. In this manner, a variance is performed on a heat generation load of each arm portion, so that it is possible to suppress excessive heat generation in only a specific switching element. That is, it is possible to suppress a switching loss of the switching element caused by the heat generation and to achieve high efficiency and a long service life of the switching element. Since the heat generation of the switching element can be suppressed, a heat radiating member can be reduced in size in a device including the converter device.

For example, it is preferable that the control unit controls ON and OFF of each switching element such that on-duty of each switching element is substantially equal in one cycle of the alternating voltage input from the alternating power supply.

According to a second aspect of the present disclosure, in the converter device according to the first aspect, each of the switching elements included in each arm portion has the same electrical characteristics.

With the converter device of the present disclosure, each switching element included in each arm portion has the same electrical characteristics. Since the electrical characteristics of each switching element are the same, it is easy to grasp a temperature drift of the switching element, as compared with a case where the electrical characteristics of each switching element are different, and thus a large current can be safely flowed. Further, it is possible to expand an operable range of a device including the present electric circuit.

According to a third aspect of the present disclosure, in the converter device according to the first aspect or the second aspect, the control unit switches a drive state of each of the switching elements by using a single control algorithm.

With the converter device of the present disclosure, the drive state of each switching element is switched by a single control algorithm. In a case where the electrical characteristics of the switching elements are different from each other, a control algorithm corresponding to the drive control is required for each switching element. Meanwhile, in a case where the electrical characteristics of the switching elements are the same as each other, the switching elements can be controlled by the single control algorithm. In this manner, it is possible to simplify the control algorithm and reduce computation costs.

According to another first aspect of the present disclosure, there is provided an air conditioning device including: the converter device according to any one of the first to third aspects.

According to still another first aspect of the present disclosure, there is provided a method for controlling a converter device having a bridge circuit including a first arm portion including a plurality of switching elements and a second arm portion including a plurality of switching elements, the method including: a rectification step of rectifying alternating power supplied from an alternating power supply; and a control step of controlling on and off of the plurality of switching elements included in the first arm portion and the plurality of switching elements included in the second arm portion, in which in the control step, on and off of the switching element in each arm portion is switched for each predetermined cycle of an alternating voltage supplied from the alternating power supply, and each arm portion has the same electrical characteristics.

### Reference Signs List

1: Motor drive device
2: Converter device
3: Inverter device
4: Alternating power supply
5: Motor
21: Rectification circuit
22: Input current detecting unit
23a: Input voltage detecting unit
23b: Zero crossing detecting unit
24: Converter control unit
24a, 24b: Gate driver
24c: SW power supply transformer
31: IPM
32: Inverter control unit
200: Bridge circuit
241: Reference specifying unit
242: Input current acquisition unit
243: Control signal generation unit
244: Storage unit
arm1: First arm portion
arm2: Second arm portion
C1: Smoothing capacitor
D1 to D4: Parasitic diode
L1: Reactor
Tr1 to Tr4: Switching element

## Claims

1. A converter device comprising:
a bridge circuit that has a first arm portion including a plurality of switching elements and a second arm portion including a plurality of switching elements, and that rectifies alternating power supplied from an alternating power supply; and
a control unit that controls on and off of the plurality of switching elements included in the first arm portion and the plurality of switching elements included in the second arm portion,
wherein the control unit switches on and off of the switching element in each arm portion for each predetermined cycle of an alternating voltage supplied from the alternating power supply, and
each arm portion has the same electrical characteristics.

2. The converter device according to claim 1,
wherein each of the switching elements included in each arm portion has the same electrical characteristics.

3. The converter device according to claim 2,
wherein the control unit switches a drive state of each of the switching elements by using a single control algorithm.

4. An air conditioning device comprising:
the converter device according to claim 1.

5. A method for controlling a converter device having a bridge circuit including a first arm portion including a plurality of switching elements and a second arm portion including a plurality of switching elements, the method comprising:
a rectification step of rectifying alternating power supplied from an alternating power supply; and
a control step of controlling on and off of the plurality of switching elements included in the first arm portion and the plurality of switching elements included in the second arm portion,
wherein in the control step, on and off of the switching element in each arm portion is switched for each predetermined cycle of an alternating voltage supplied from the alternating power supply, and
each arm portion has the same electrical characteristics.
